# EUROPEAN PATENT APPLICATION

(11) **EP 2 813 714 A1**
(43) Date of publication of application: **17.12.2014**
(21) Application number: 13171388.5
(22) Date of filing: 11.06.2013
(51) Int. Cl.: F16B 21/06, G01D 11/30, H02B 1/42, H02B 15/00

(54) **Device for clamping an object in a panel**

(71) Applicant: Veth Propulsion B.V., 3356 LN Papendrecht (NL)
(72) Inventor: Van Dam, Cor Jan Paul, 3256 AM Achthuizen (NL)
(74) Representative: De Vries & Metman

(57) **Abstract**

The invention concerns a device for clamping an object in an opening in a panel whereby the object can access the opening from the front of the panel in a mounting direction and whereby the device is mounted behind the front of the panel. Such an object might be an instrument that is mounted in a control panel, for instance in a control room for a ship. In accordance with the invention the device comprises a flexible element mounted behind the front of the panel whereby the flexible element can resiliently move mainly parallel to the panel to clamp the object.

## Description

The invention concerns a device in accordance with the preamble of claim 1. Such a device is known from US 3589656 or from US 3765628. In the known devices two L-shaped clamping pieces surround the object. Screw means accessible through the panel to tension the clamping pieces around the object and the tensioned clamping pieces position the object in the opening. The known devices are complicated, require accurately positioned holes through the panel for using the screw means and require screwing for fixing the object in the mounted position. This leads to higher costs which is a disadvantage and not always required for keeping objects in their mounted position.

In order to overcome this disadvantage the device is according to claim 1. In this way the object can be moved into and from the panel without additional clamping or loosening parts that clamp the object. This leads to a more simple construction and ease of mounting and dismounting the object.

In accordance with an embodiment the device is according to claim 2. In this way, the flexible element pushes the flexible ring against the object and the object pushes against the flexible ring in the direction of the plane of the flexible ring so that there is no force to push it sideways on the flexible element. Choosing from flexible rings with different cross sections makes it possible to adapt the clamping force to the specific requirements. Also dimensional variations in the different objects can be taken into account.

In accordance with an embodiment the device is according to claim 3. In this way, the flexible ring is mounted loosely around the mounting surface of the flexible element so that there is no additional force between the flexible ring and the mounting surface other than the force between the flexible ring and the object. This means that the friction between the flexible ring and the object or the flexible ring and the mounting surface only depends on the material of the object and on the material of the mounting surface respectively.

In accordance with an embodiment the device is according to claim 4. In this way, the flexible ring will slide over the mounting surface when the object moves into the panel. The flexible ring then remains stationary relative to the object so that there is less wear on the flexible ring.

In accordance with an embodiment the device is according to claim 5. In this way, the clamping force can be adapted by changing the position of the flexible ring on the flexible element and thereby changing the resilience of the flexible element.

In accordance with an embodiment the device is according to claim 6. In this way, the flexible beam is simple to produce. In accordance with an embodiment the device is according to claim 7. In this way, the clamping device can be mounted in an easy way on the panel.

The invention is described with the aid of several embodiments that are illustrated using a drawing. In the drawing
Figure 1 shows a perspective front view of a panel with openings,
Figure 2 shows the perspective front view of the panel of figure 1 with an instrument to be mounted in an opening,
Figure 3 shows the perspective front view of the panel of figure 1 with the instrument mounted in the opening,
Figure 4a shows a perspective rear view of the panel of figure 1 with a support assembly mounted at the rear around an opening,
Figure 4b shows a detail A of figure 4a,
Figure 5a shows the perspective rear view of figure 4a with the instrument mounted in the support assembly,
Figure 5b shows a detail B of figure 5a,
Figure 6a shows the rear view of figure 5a,
Figure 6b shows a detail C of figure 6a with rings clamping the instrument in cross section,
Figure 7 shows in side view a ring clamping the instrument, and
Figure 8 shows in two cross sections embodiments of the rings for clamping the instrument.

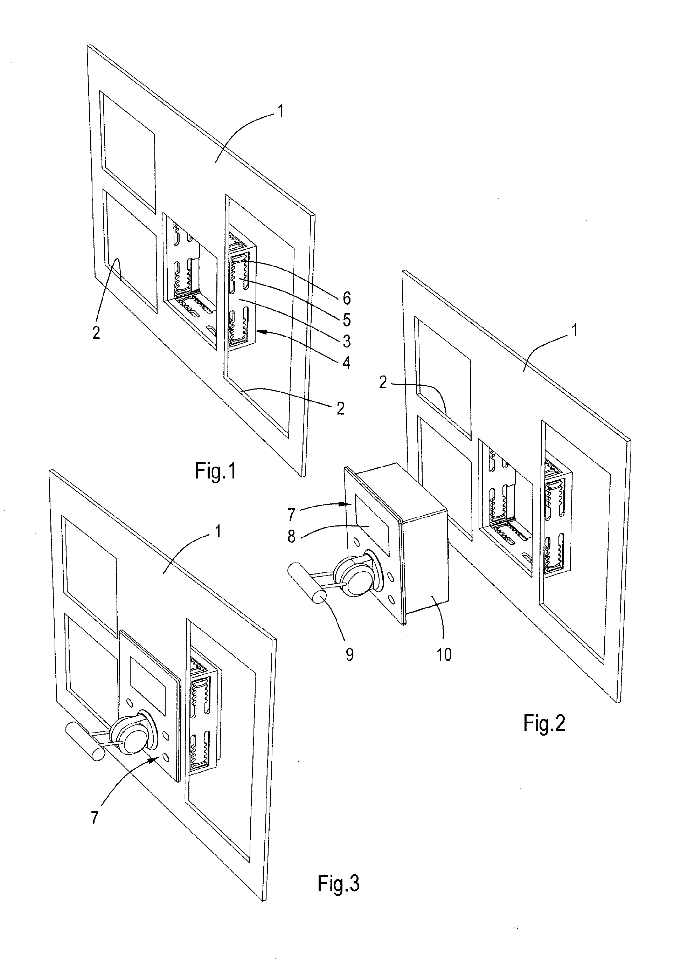

Figure 1 and figure 2 show a panel 1 with openings 2. The panel 1 will be mounted in a console (not shown) that might be mounted on the bridge of a ship or in similar situations such as control rooms where an operator reads dials 8 and/or activates handles 9 on instruments 7 mounted in the panel 1. The instrument 7 is read and/or activated from the front side of the panel 1 and cables and similar (not shown) are connected to the instrument 7 at the rear of the panel 1. During normal use the instruments 7 are mounted in the panel 1 with the instruments 7 more or less flush with the panel 1 and the instruments 7 extend in the space at the back of the panel 1.

The instruments 7 are clamped in the panel 1 so that during normal use they remain in a fixed position and can be pulled from the panel 1 when adjustments at the rear of the instrument 7 or replacement of the instrument 7 are/is needed. For mounting the instrument 7 in the panel 1 a support assembly 4 is mounted at the backside of the panel 1 around the opening 2. In the shown embodiment the openings 2 and the support assemblies are square or rectangular; in other embodiments the openings 2 are circular or have other shapes. Figure 3 shows the instrument 7 mounted in the panel 1.

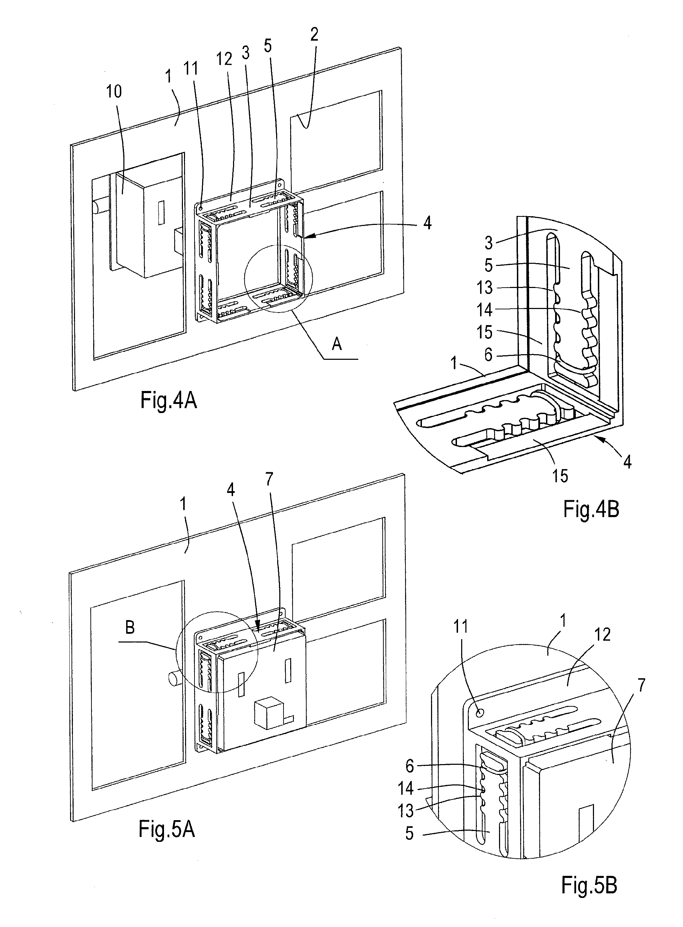

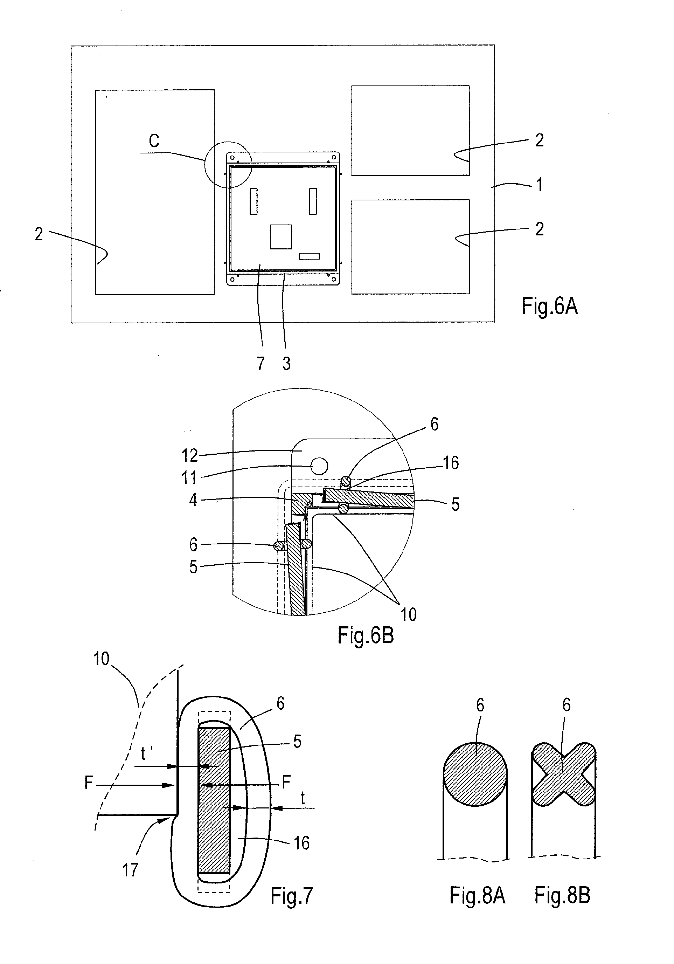

The support assembly 4 comprises a support 3 that is mounted on the panel 1 and the support 3 supports a beam 5; on the beam 5 there is mounted a ring 6, the ring 6 contacts an instrument sidewall 10 of the instrument 7 that is mounted in the support assembly 4. The plane of the ring 6 is perpendicular to the surface of the instrument sidewall 10 and the beam 5 resiliently presses the ring 6 against the instrument sidewall 10 and so clamps the instrument 7 in a fixed position in the panel 1. For clamping the instrument there is at least one beam 5 with a ring 6, there might be more than one beam 5 with rings 6 on opposite sides of the instrument side wall 10. Figures 4a and 4b show the rear view of the panel 1 with the support assembly 4. The support assembly 4 has a ridge 12 that is mounted on the backside of the panel 1 with fasteners 11. In other embodiments other means for fastening the support assembly 4 on the panel 1 are used, such as double-sided tape. The side walls of the support assembly 4 guide the instrument 7 when it is positioned into the opening 2 of the panel 1. (see figures 5a, 5b, 6a and 6b). The side wall of the support assembly 4 has an opening in which the beam 5 is positioned and the support 3 of the beam 5 is part of this side wall. Between the beam 5 and the side away from the panel 1 at the rear-side of the panel 1, the mounting assembly has a recess 15. The recess 15 prevents that instrument 7 touches on the side of the opening when the instrument 7 is pushed slightly tilted past the beam 5. In other embodiments instead of the recess 15 the mounting assembly 4 might be bevelled to facilitate the passage of the instrument 7 or the opening in which the beam 5 is positioned might be larger or the beam 5 (locally) forms the side of the mounting assembly 4 furthest from the panel 1.

The beam 5 has notches 13 that form grooves 14 on the beam 5, the ring 6 fits in the groove 14 and can slide in the groove 14 around the beam 5. The beam 5 can have several grooves 14 so that the ring 6 can be fitted as different distances from the support 3 so that the resilience of the beam 5 can be adapted to a specific situation. Selecting differing thicknesses t for the ring 6 (see figure 7) makes further adaption to specific situations possible.

Figures 5a, 5b, 6a and 6b show the instrument 7 mounted in the panel 1 seen from the rear side of the panel. The sidewalls 10 of the instrument 7 push against the rings 6 so that the beams 5 are bended and create a clamping force F (see figure 7).

This clamping force F positions the instrument in the panel 1. Figure 7 shows the clamping forces F between the ring 6 and the beam 5 and between the ring 6 and the sidewall 10. The ring 6 has such dimensions that the ring 6 is mounted with play around the beam 5 whereby there is a gap 16 between the beam 5 and the ring 6 at the side opposite the sidewall 10. This means that there is no tension in the ring 6 that would create additional forces between the ring 6 and the beam 5. The clamping F creates a friction that prevents moving of the ring 6 relative the beam 5 and the sidewall 10. This friction depends on the material and the roughness. In an embodiment the material of the beam 5 has a lower friction coefficient than the sidewall 10 so that the ring 6 moves with the sidewall 10 and slides over the beam 5. In the shown embodiment the force F causes a compression of the ring 6 so that the thickness t is reduced to a thickness t' and locally at the corner of the sidewall 10 the ring 6 has a ridge 17. When the instrument 7 is pushed into the opening 2 of the panel 1 this ridge 17 prevents or obstructs movement of the ring 6 relative to the sidewall 10 so that movement of the ring 6 with the sidewall 10 is preferred above sliding of the sidewall 10 over the ring 6. (In the inside surface of the ring 6 due to the smaller diameter and the inside curve there is no or a small ridge that prevents sliding of the ring 6 over the beam 5). The sliding of the ring 6 over the beam 5 prevents damaging of the ring 6 due to sharp corners of the intersecting sidewalls 10.

Figures 8 shows two embodiments of ring 6 whereby the cross section of the ring has a circular or respectively a quad shape. It will be clear to the skilled man that other shapes are possible such as square, rectangular or oval. The rings 6 are of flexible material such as rubber. It is possible that the material such as rubber is massive or foamed.

In the shown embodiment the beam 5 is coupled to a support 3 that is part of a support assembly 4 and the beam 5, support 3 and support assembly 4 form a single part. The single part might be plastic or metal. In other embodiments the beam 5, support 3 and/or support assembly 4 might be separate parts and the various parts might be made from different materials.

## Claims

1. Device for clamping an object (7) in an opening (2) in a panel (1) whereby the object can access the opening from the front of the panel in a mounting direction and whereby the device is mounted behind the front of the panel **characterized in that** the device comprises a flexible element (5) mounted behind the front of the panel whereby the flexible element can resiliently move mainly parallel to the panel to clamp the object.

2. Device in accordance with claim 1 wherein a flexible ring (6) preferably with a constant cross section is mounted around a mounting surface on the flexible element (5) and the flexible element might have a set of notches (13) or a groove (14) for positioning the flexible ring (6) in such a way that the mounting direction is parallel to the plane of the flexible ring and whereby the flexible element might be a cantilevered beam.

3. Device in accordance with claim 2 wherein the flexible ring has no tension when mounted.

4. Device in accordance with claim 2 or 3 wherein the mounting surface is smooth and/or the friction coefficient between the mounting surface and the flexible ring (6) is less than between the object (7) and the flexible ring and wherein the flexible ring might be from rubber or similar material.

5. Device in accordance with one of the claims 2, 3 or 4 wherein each flexible element has two or more sets of notches (13) or grooves (14) for positioning the flexible ring in different positions on the flexible element (5).

6. Device in accordance with one of the claims 2-5 wherein the flexible element comprises a flexible beam (5) and wherein the beam might have a rectangular cross section and/or might be from plastic material and wherein between the flexible beam and the panel (1) might be a recess (15) or an opening.

7. Device in accordance with claim 6 wherein a support (3) is mounted on the panel (1) and preferably at the back thereof and the flexible beam (5) is fastened on the support; the supports for two or more flexible beams might form a single part (4) surrounding the opening (2).
